# EUROPÄISCHE PATENTSCHRIFT

(11) **EP 2 473 348 B1**
(45) Veröffentlichungstag und Bekanntmachung des Hinweises auf die Patenterteilung: **14.10.2015**
(21) Anmeldenummer: 10747027.0
(22) Anmeldetag: 25.08.2010
(51) Int. Cl.: B32B 27/02, B32B 27/12, B32B 27/36, C08L 101/16

(54) **FLÄCHENGEBILDE**
SHEET MATERIAL
MATÉRIAU EN FEUILLE

(30) Priorität: 31.08.2009 EP 09169002
(43) Veröffentlichungstag der Anmeldung: 11.07.2012
(73) Patentinhaber: PHP Fibers GmbH, 63784 Obernburg (DE)
(72) Erfinder: VIETH, Christian, 63939 Wörth (DE); KOSSENDEY, Reinhold, 42477 Radevormwald (DE); KONOPIK, Axel, 42119 Wuppertal (DE)
(74) Vertreter: Oberlein, Gerriet H. R.
(86) Internationale Anmeldenummer: PCT/EP2010/062360
(87) Internationale Veröffentlichungsnummer: WO 2011/023707

(56) Entgegenhaltungen:
- EP-A2- 0 689 807
- DE-A1-102005 028 175
- US-A1- 2006 167 132
- DATABASE WPI Week 200350, Derwent Publications Ltd., London, GB; Class A35, AN 2003-532749 -& WO 03 045692 A1 (DYNIC CORP) 05 Juni 2003

## Beschreibung

Die Erfindung betrifft ein Flächengebilde.

Flächengebilde aus bioabbaubaren Material sind allgemein bekannt. In der Druckschrift EP 1 418 201 wird beispielsweise eine bioabbaubare Kunststoffzusammensetzung vorgeschlagen, die in Form eines Faservlieses, einer Folie oder eines Blattes ausgestaltet sein kann.

Nachteilig bei den bekannten Flächengebilden ist jedoch, dass die Flächengebilde über ihre gesamte Erstreckung einstückig und anscheinend mit den gleichen Eigenschaften ausgestattet sind. Beispielsweise weist ein bioabbaubares Flächengebilde nach dem Stand der Technik eine einheitliche Stabilität auf.

Aus der Druckschrift DE 43 20 041 ist ein Monofilamentgarn bekannt, das zur Herstellung von textilen Geweben verwendet wird. Das Monofilamentgarn wurde dabei aus einem bioabbaubaren Polymer hergestellt. Nachteilig bei dem Monofilamentgarn gemäß dieser Druckschrift ist jedoch, dass das Monofilamentgarn durch seinen großen Durchmesser besonders steif und schwer ist und das aus dem Monofilament hergestellte Trägermaterial nur unzureichend für die Verwendung als Trägermaterial für flexible und leichte Gegenstände geeignet ist.

Die Druckschrift JP 2004-358658 beschreibt eine bioabbaubare laminierte Harzplatte, die zusammengesetzt ist aus einem verstärkten Basistextil aus einem Harz und aus den Harzlaminaten 3a und 3b, welche auf beiden Seiten des Basistextils 2 laminiert sind. Das Textil besteht aus einem Gewebe aus 500 Denier (96f) - Fasern aus Polymilchsäure. Die Harzlaminate 3a und 3b bestehen aus einer schmelzgekneteten Mischung aus 70 Masse % Polybutylensuccinat und 30 Masse % eines natürlichen bioabbauen Polymers. Die Harzplatte hat eine ausgezeichnete Bruch-, Abplatz- und Scherstärke.

Es war daher die Aufgabe der vorliegenden Erfindung, ein Flächengebilde zur Verfügung zu stellen, das ein besonders geringes Flächengewicht aufweist bei gleichzeitiger hoher Festigkeit und flexibel genug ist, um sich auch an Gegenständen anpassen zu können.

Gelöst wird diese Aufgabe durch ein Flächengebilde mit den Eigenschaften des Anspruchs 1.

Durch den Aufbau der Trägerschicht durch Multifilamentgarne mit einer Festigkeit von mindestens 40 cN/tex (gemessen nach DIN EN ISO 2062 beziehungsweise ASTM D 885) kann vorteilhaft eine hohe Stabilität der Trägerschicht bei gleichzeitiger Verwendung von wenig Fäden pro Zentimeter in der Trägerschicht erreicht werden. Durch die geringe Anzahl von Fäden pro Zentimeter kann vorteilhaft das Flächengewicht der Trägerschicht reduziert und gleichzeitig das Herstellungsverfahren vereinfacht und beschleunigt werden. Die Verwendung von Multifilamentgarnen erlaubt die Herstellung eines flexiblen - also anpassbaren Gegenstandes als Trägerschicht. Durch die Multifilamentgarne kann die Trägerschicht beispielsweise leichter verbogen werden, um die Sichtschicht aufzubringen oder zu präsentieren, ohne dass die Trägerschicht bricht oder beschädigt wird. Bei der Verwendung von Monofilamenten - die in der Regel einen dicken Querschnitt aufweisen - zum Aufbau der Trägerschicht, wird die Biegsamkeit der Trägerschicht ohne die Trägerschicht zu beschädigen stark herabgesetzt.

Durch den Mehrschichtaufbau des erfindungsgemäßen Flächengebildes kann das Flächengebilde zudem besser an den jeweiligen Verwendungszweck des Flächengebildes angepasst werden. Beispielsweise kann das Textil der Trägerschicht je nach Verwendungszweck unterschiedlich fest gewebt, gewirkt oder gelegt werden, so dass bei gleicher Folie für die Sichtschicht unterschiedlich stabile Flächengebilde entstehen. Weiterhin kann die Sichtschicht unterschiedlich ästhetisch ausgebildet werden, wodurch bei der Verwendung gleicher Trägerschichten, aber ästhetisch unterschiedlicher Sichtschichten, unterschiedliche Flächengebilde entstehen können. Eine solche Art des "Baukastenprinzips" ist insbesondere zur Reduzierung von Lagerkosten bei gleichzeitig hoher Variationsmöglichkeit bezüglich der Ausgestaltung des bioabbaubaren Flächengebildes vorteilhaft.

Die Trägerschicht ist bevorzugt so stabil ausgebildet, dass sie die Sichtschicht, ohne beispielsweise umzuknicken, tragen kann. Im Fall einer Folie als Sichtschicht ist die Trägerschicht beispielsweise so stabil, dass sich bei einer Verbindung zwischen Folie und Trägerschicht das so gebildete Flächengebilde nicht von selbst zusammenrollt.

Bevorzugt ist die Trägerschicht als technische Trägerschicht ausgebildet. Eine technische Trägerschicht besteht überwiegend und bevorzugt vollständig aus technischen Garnen. Technische Garne besitzen im Gegensatz zu textilen Garne eine höhere Festigkeit. Die Festigkeit von technischen Garnen liegt bei über 40 cN/tex gemessen nach DIN EN ISO 2062 (ASTM D 885).

Die Multifilamentgarne der Trägerschicht weisen bevorzugt eine Festigkeit von mehr als 45 cN/tex und ganz besonders bevorzugt von mehr als 50cN/tex auf. Weiterhin bevorzugt ist das Multifilamentgarn der Trägerschicht ein 1100 dtex Garn mit 210 Filamenten. Die Bruchkraft beträgt bevorzugt 54,1 N und die Bruchfestigkeit (auch nur als Festigkeit bezeichnet) bevorzugt 47,5 cN/tex. Weiterhin beträgt die Bruchdehnung bevorzugt 35 % und der Schrumpf beträgt bevorzugt 3,5%, gemessen über 2 Minuten bei 130°C mit einer Vorspannung von 1 mN/tex. Bruchkraft, Bruchdehnung und Bruchfestigkeit werden nach DIN EN ISO 2062 gemessen.

Besonders bevorzugt handelt es sich bei dem Multifilamentgarn zur Herstellung der Trägerschicht um das Garn Diolen ® 150 BT, 1100 dtex f210. Das genannte Garn besteht aus Polymilchsäure und wird von der Firma Polyamid & Polyester High Performance verkauft. Die Trägerschicht kann ebenso bevorzugt aus mindestens einem Garn bestehen, dessen Fasern bevorzugt aus dem Polymer 4032 D und/oder 6400 D der Firma NatureWorks LLC hergestellt sind.

Die Sichtschicht ist bevorzugt die Schicht des Flächengebildes, die von einem Betrachter gesehen wird beziehungsweise gesehen werden soll. Beispielsweise stellt die bedruckte Oberfläche eines Plakats eine Sichtschicht dar. Die Sichtschicht besteht bevorzugt nur aus der bereits genannten Folie, weswegen im Folgenden die Begriffe Sichtschicht und Folie synonym verwendet werden.

Die Trägerschicht besteht in einer bevorzugten Ausführungsform ausschließlich aus dem Textil. Das Textil der Trägerschicht kann beispielsweise ein Gewebe, ein Gewirke, ein Gelege oder ein Gestrick (unidirektional oder multidirektional) oder ein Vlies sein.

Besonders bevorzugt besteht die Trägerschicht und/oder die Sichtschicht vollständig aus bioabbaubaren Polymeren, wodurch die Sichtschicht und/oder die Trägerschicht bioabbaubar ist.

Unter einer bioabbaubaren Sichtschicht und/oder Trägerschicht soll verstanden werden, wenn die Sichtschicht und/oder die Trägerschicht im wesentlichen vollständig aus bioabbaubaren Material hergestellt wird. Die Sichtschicht und die Trägerschicht werden im wesentlichen vollständig aus bioabbaubaren Material hergestellt, wenn die Sichtschicht und/oder die Trägerschicht zu mindestens 70%, bevorzugt zu mindestens 80%, besonders bevorzugt zu 90%, ganz besonders bevorzugt zu 100% aus bioabbaubaren Material hergestellt ist.

Unter einem bioabbaubaren Material soll jedes Material verstanden werden, dass durch Mikroorganismen, Enzyme oder Hydrolyse gemäß der Richtlinien der DIN - Norm 13432:2000-12 innerhalb von etwa sechs bis zehn Wochen in einer Großkompostieranlage abgebaut werden kann. Bioabbaubare Materialien sind beispielsweise Biokunststoffe aus nachwachsenden Rohstoffen, additivierte Polyolefinfolien, wie Polyethylen, sowie erdöl basierende Materialien, wie beispielsweise Ecoflex der Firma BASF.

Besonders bevorzugt wird die Sichtschicht und/oder die Trägerschicht vollständig aus PLA (Polylactic Acid = Polymilchsäure) Polymer 4032D der Firma NatureWorks oder Polymer 6400D der Firma NatureWorks oder einem Gemisch der eben genannten Polymere hergestellt. Ebenfalls besonders bevorzugt wird die Trägerschicht durch Schmelzen von PLA Polymer 6400D Pellets und Verspinnen dieser Schmelze zu einem Garn hergestellt. Ganz besonders bevorzugt wird die Sichtschicht durch Schmelzen von PLA Polymer 4032D Pellets und Verarbeiten dieser Schmelze zu einer Folie hergestellt.

Da das Flächengebilde aus einem bioabbaubaren Textil und einer bioabbaubaren Sichtschicht aufgebaut werden kann, wird im Folgenden auch von einem bioabbaubaren Flächengebilde berichtet. Es versteht sich dabei, dass das bioabbaubare Flächengebilde auch Schichten oder Materialien enthalten kann, die nicht nach der oben genannten Definition bioabbaubar sind. Bevorzugt weist die Trägerschicht ein Textil aus Garnen aus bioabbaubarer Polymilchsäure auf. Besonders bevorzugt besteht die Trägerschicht dabei vollständig aus dem Textil, wobei das Textil vollständig aus Garnen aus Polymilchsäure besteht. Die Verwendung von Polymilchsäure ist besonders vorteilhaft, da die Herstellung und Verarbeitung von Polymilchsäure bereits gut erforscht ist und Polymilchsäure ein biologisch abbaubarer Werkstoff im Sinne der Erfindung ist.

Als Textil zur Bildung der Trägerschicht kann beispielsweise ein Gewirk, ein Vlies, ein Gewebe oder ein Gelege verwendet werden. Gewebe und Gelege sind Ausführungsformen einer Gitterstruktur und werden gemeinsam auch als Gitter bezeichnet.

Bevorzugt wird als Gewebe ein Leinwandgewebe verwendet. Das Leinwandgewebe kann bevorzugt 7 Fd/cm (Fäden pro cm) in Kettrichtung und 7 Fd/cm in Schussrichtung (7/7 KS) mit einem Flächengewicht von ca. 170 g/m² aufweisen. Zur Herstellung des Gewebes werden bevorzugt Multifilamentgarne mit einem Titer von 1100 dtex und einer Festigkeit von 475 mN/tex verwendet.

Das Gewirke kann bevorzugt 7,1 Fäden/cm in Kett- und Schussrichtung (bzw. 18 inches/18 inches in K/S) mit einem Flächengewicht von ca. 170 g/m² aufweisen. Zur Herstellung des Gewirkes werden bevorzugt Multifilamentgarne mit einem Titer von 1100 dtex und einer Festigkeit von 475 mN/tex verwendet. Zusätzlich wird ein Bindegarn mit einem Titer von 80 dtex verwendet, das die gleichen Schrumpfeigenschaften aufweist, wie das eingesetzte Garn für Kette und Schuss

Das Gelege kann bevorzugt 4,9 Fäden/cm mit einem Flächengewicht von ca. 110 g/m² aufweisen. Zur Herstellung des Geleges werden ebenfalls bevorzugt Multifilamentgarne mit einem Titer von 1100 dtex und einer Festigkeit von 475 mN/tex verwendet.

Grundsätzlich weist die Folie der Sichtschicht Polymilchsäure auf. Die Folie kann dabei beispielsweise aus Polymilchsäuregranulat oder Pulver bei einer thermischen Umformung zur Folie gefertigt werden, wobei die fertige Folie vollständig aus Polymilchsäure besteht. Die Folie weist beispielsweise eine Dicke von 30µm bis 1 mm auf.

Es soll deutlich werden, dass zur Herstellung des bioabbaubaren Flächengebildes die bereits fertige Folie als Sichtschicht auf die bereits fertig ausgebildete Trägerschicht gelegt wird. Um zu verdeutlichen, dass zur Bildung des bioabbaubaren Flächengebildes einzelne Schichten verwendet werden, wird auch die Bezeichnung "separate Folie" beziehungsweise "separate Sichtschicht" verwendet.

Geeignete Folien werden mittels Blasfolienextrusion bzw. Folienblasverfahren hergestellt. Derartige Verfahren sind dem Fachmann an sich bekannt.
Um Folien zu blasen, wird dem Extruder am Ende eine Ringdüse nachgeschaltet. Die plastifizierte Kunststoffmasse wird zu einem Schlauch gepresst, der mit Luft auf ein Mehrfaches des ursprünglichen Durchmessers aufgeblasen und mit erhöhter Geschwindigkeit nach oben abgezogen wird. Nicht nur der Zug in Längs- und Querrichtung, sondern auch der Zeitpunkt des Abkühlens entscheiden über die Foliendicke. Flach zusammengelegt wird der Schlauch dann entweder als Schlauchfolie oder seitlich aufgeschnitten als Flachfolie aufgewickelt. Folien auf Stärkebasis werden in großen Mengen auf Folienblas-Extrudern hergestellt.

Vorzugsweise wird die separate Folie der Sichtschicht durch Laminieren, Kaschieren oder Kalandrieren auf die Trägerschicht des bioabbaubaren Flächengebildes aufgebracht. Besonders bevorzugt erfolgt die Verbindung der Sichtschicht mit der Trägerschicht durch Thermokaschierung. Hierbei werden die Sichtschicht und die Trägerschicht unter Druck und Hitze miteinander verschmolzen, indem zumindest eine der beiden genannten Schichten anschmilzt und als Kleber zwischen den Schichten wirkt. Bei der Thermokaschierung wird folglich kein weiterer Klebstoff benötigt. Weiterhin ist jedoch auch denkbar, dass die Sichtschicht und die Trägerschicht durch einen Laminiervorgang miteinander verbunden werden. Bei dem Laminiervorgang wird ein zusätzlicher Klebstoff verwendet, wobei der Klebstoff im Laminiervorgang erhitzt und dadurch klebrig wird (Heißlaminierung) oder bereits klebrig ist (Kaltlaminierung). Im Falle der Heißlaminierung weist die Sichtschicht und/oder die Trägerschicht bevorzugt eine zusätzliche Klebeschicht mit Klebstoff auf, die mit der Sichtschicht und/oder der Trägerschicht (vordem Laminiervorgang) in Kontakt steht.

Beim Kalandrieren hingegen wird eine Schmelze durch ein System aus mehreren aufeinander angeordneten beheizten Stahlwalzen hindurchgeführt wird. Dabei entstehen Folienstärken von 25-1000µm.

Vorzugsweise weist die Folie der Sichtschicht (also die Folie) eine bedruckbare Oberfläche auf. Die Oberfläche der Folie kann speziell bearbeitet sein, um die Druckfarben besser aufnehmen zu können. Beispielsweise kann die Folie eine besondere Beschichtung/Lackierung aufweisen, so dass die Folie für den Einsatz von Inkjet-Druckern geeignet ist. In einem anderen Beispiel kann die Folie an einer der Oberflächen angeraut werden, um das Weiterverarbeiten der Folie mittels Siebdruck oder Plotterdruck zu ermöglichen.
Es ist denkbar, dass die Folie bereits bedruckt ist, wenn sie zur Bildung des bioabbaubaren Flächengebildes auf die Trägerschicht gelegt wird oder das bioabbaubare Flächengebilde erst nach dessen Herstellung bedruckt wird. Zum Schutz des Drucks kann über den Druck (und auch unter dem Druck) beispielsweise eine Schutzschicht vorgesehen sein, die den Druck vor Beschädigungen - beispielsweise während der Herstellung der Verbindung zwischen Sichtschicht und Trägerschicht - schützt. Eine solche Schutzschicht kann beispielsweise nach der Herstellung der Verbindung zwischen Sichtschicht und Trägerschicht oder nach dem Anbringen des bioabbaubaren Flächengebildes an seinem Bestimmungsort von der Folie abgezogen werden oder sich bei der Herstellung der Verbindung selbst auflösen - beispielsweise durch Schmelzen oder Verdampfen.

Die Trägerschicht und die Sichtschicht können aus dem gleichen Material aufgebaut sein und/oder den gleichen Schmelzpunkt aufweisen. Bei einer Thermokaschierung würde bei einer gleichmäßigen Erwärmung der Sichtschicht und der Trägerschicht in diesem Fall sowohl die Sichtschicht als auch die Trägerschicht angeschmolzen, wodurch aus der Schmelze der Sichtschicht und der Trägerschicht eine Verbindung zwischen den genannten Schichten entsteht. Selbstverständlich ist es auch denkbar, dass nur eine der Schichten erwärmt und angeschmolzen wird, um die Verbindung zwischen den Schichten herzustellen.

Bevorzugt weist die Sichtschicht aber einen anderen Schmelzpunkt als die Trägerschicht auf. Beispielsweise kann die Trägerschicht aus einem bioabbaubaren Polymer bestehen, das einen höheren Schmelzpunkt aufweist als das bioabbaubare Polymer der Sichtschicht. Hierdurch schmilzt die Sichtschicht bei Temperaturen, bei denen die Trägerschicht noch nicht schmilzt. Bei einer Thermokaschierung einer solchen Sichtschicht und einer solchen Trägerschicht würde die Sichtschicht auf die Trägerschicht gelegt und beide Schichten würden bei einer Temperatur oberhalb des Schmelzpunktes der Sichtschicht unter Druck für eine kurze Zeitdauer miteinander verpresst werden. Durch die gewählte Temperatur würde die Sichtschicht oberflächlich (durch Wahl einer nur geringen Zeitdauer der Erhitzung) anschmelzen, während die Trägerschicht nicht (an)schmilzt. Die erzeugte Schmelze der Sichtschicht dient als Klebstoff zwischen der Sichtschicht und der Trägerschicht.

Es ist auch denkbar, dass die Trägerschicht aus einem bioabbaubaren Polymer mit einem geringeren Schmelzpunkt als die Sichtschicht besteht. In diesem Fall kann bei der Thermokaschierung die Trägerschicht zumindest oberflächlich angeschmolzen werden (während die Sichtschicht nicht schmilzt), wodurch die Schmelze der Trägerschicht als Klebstoff für die Herstellung der Verbindung zwischen Sichtschicht und Trägerschicht dient.

Sowohl bei der Kaschierung, der Laminierung als auch bei der Kalandrierung ist es denkbar, dass nur eine der Schichten (Sichtschicht oder Trägerschicht) erwärmt wird, wohingegen die andere Schicht nicht erwärmt wird. Beispielsweise kann zur Herstellung des bioabbaubaren Flächengebildes die Trägerschicht auf eine beheizbare erste Presse und die Sichtschicht auf einen nicht beheizbare oder sogar kühlbare zweite Presse gelegt werden. Die erste und zweite Presse werden zur Herstellung der Verbindung der Schichten aufeinandergepresst.

Die Verbindung zwischen der Sichtschicht und der Trägerschicht ist bei allen genannten Verfahren zur Herstellung der Verbindung fest, so dass die Sichtschicht und die Trägerschicht nicht mehr ohne Krafteinwirkung (und Zerstörung zumindest einer der Schichten) voneinander getrennt werden können.

Ein weiterer Gegenstand der Erfindung ist ein Verfahren zur Herstellung des bisher beschriebenen bioabbaubaren Flächengebildes, wobei das Verfahren die Merkmale des Anspruchs 6 aufweist.

Bevorzugt wird zur Herstellung des bioabbaubaren Flächengebildes in einem ersten Schritt ein Textil als Trägermaterial aus Garnen aus einem bioabbaubaren Polymer hergestellt. Das Garn kann in einem einstufigen oder einem zweistufigen Verfahren aus Polymilchsäure hergestellt werden.

Ein einstufiges Herstellungsverfahren zur Herstellung des Garns kann wie folgt beschrieben werden:
Bei einem einstufigen Verfahren entsteht bevorzugt ein Garn mit einem Titer von 1100 dtex und 210 Filamenten. Die verwendete Polymilchsäure (Polymer 4032D oder 6400D von NatureWorks) wird bei 210°C geschmolzen und das anschließend extrudierte Garn wird in einem Verhältnis von 1:4,3 verstreckt. Die Aufwickelgeschwindigkeit des so hergestellten Garns beträgt 1618 Meter pro Minute und die Relaxation beträgt 1:0,92. Das so hergestellte Garn weist eine Festigkeit von 43,6 cN/tex und eine Dehnung von 37,6 % auf. Der Schrumpf (hotair-shrinkage) bei 150° C beträgt 19,2 %.

Ein zweistufiges Herstellungsverfahren zur Herstellung des Garns kann wie folgt beschrieben werden:
Bei einem zweistufigen Verfahren entsteht bevorzugt ein Garn mit einem Titer von 1100 dtex und 210 Filamenten. Die verwendete Polymilchsäure (Polymer 4032D oder 6400D von NatureWorks) wird bei 210°C geschmolzen und das anschließend extrudierte Garn wird in einem Verhältnis von 1:4,2 verstreckt. Die Aufwickelgeschwindigkeit des so hergestellten Garns beträgt 800 Meter pro Minute und die Relaxation beträgt 1:0,93. Das so hergestellte Garn weist eine Festigkeit von 47,5 cN/tex und eine Dehnung von 35 % auf. Der Schrumpf (hot-air-shrinkage) bei 150° C beträgt 15 %. Bei einer Verstreckung von 1:5,35 und einer Relaxation von 1:0,93 weist das Garn aus dem zweistufigen Herstellungsverfahren eine Festigkeit von 52,3 cN/tex und eine Dehnung von 33,1% auf. Der Schrumpf (hot-air-shrinkage) beträgt in diesem Fall bei 150°C 4,6%.

Weiterhin wird bevorzugt in einem zweiten Schritt eine Sichtschicht in Form einer Folie aus einem bioabbaubaren Material hergestellt. In einem dritten Schritt werden die Sichtschicht und die Trägerschicht aufeinander gelegt und miteinander verbunden. Für die Ausgestaltung des Textils der Trägerschicht und der Folie der Sichtschicht gelten die bereits genannten Möglichkeiten.

Als Sichtschicht können folgende bioabbaubare Polymerfolien verwendet werden: PLA-Folie (Schmelzpunkt 170°C), beispielsweise PLA Polymer 4032 D.

Vorzugsweise erfolgt die Verbindung der Sichtschicht und der Trägerschicht miteinander durch das Kaschieren, das Laminieren oder das Kalandrieren der Schichten (Trägerschicht und Sichtschicht).

Zur Kaschierung, Laminierung oder Kalandrierung der Schichten wird bevorzugt die Trägerschicht und/oder die Sichtschicht erwärmt. Bei einer Thermokaschierung ist dabei besonders bevorzugt, wenn eine der Schichten zumindest teilweise angeschmolzen wird, wohingegen die andere Schicht nicht schmilzt.

In einer Ausführungsform wird zur Herstellung der Verbindung die Sichtschicht erwärmt. Auch hier kann (wie eben beschrieben) nur die Sichtschicht erwärmt werden oder die Sichtschicht und die Trägerschicht werden erwärmt, wobei nur die Sichtschicht anschmilzt oder eine Klebeschicht (der Sichtschicht) schmilzt. In dieser Ausführungsform schmilzt die Trägerschicht nicht, das heißt, die Trägerschicht wird auch nicht angeschmolzen. In einer anderen Ausführungsform wird nur die Trägerschicht erwärmt oder die Trägerschicht und die Sichtschicht werden erwärmt, wobei nur die Trägerschicht (oder eine Klebeschicht der Trägerschicht) schmilzt beziehungsweise anschmilzt. In einer noch anderen Ausführungsform werden sowohl die Sichtschicht als auch die Trägerschicht zur Kaschierung, Laminierung oder Kalandrierung so erwärmt, dass sowohl die Sichtschicht als auch die Trägerschicht teilweise anschmelzen. Die Schmelze der Sichtschicht und die Schmelze der Trägerschicht wirken dabei als Klebstoff im Fall einer Thermokaschierung. Im Fall einer Laminierung kann sowohl die Sichtschicht als auch die Trägerschicht eine zusätzliche Klebeschicht aufweisen, die bei der Erwärmung der beiden Schichten schmilzt, ohne dass die Schichten selber schmelzen.

Vorzugsweise wird die für einen Betrachter des bioabbaubaren Flächengebildes sichtbare Oberfläche der Sichtschicht nach der Verbindung mit der Trägerschicht behandelt. Denkbar ist jedoch auch, dass die Sichtschicht - bevor sie mit der Trägerschicht verbunden wird - einer Behandlung unterzogen wird. Eine solche Behandlung kann beispielsweise das Bedrucken der sichtbaren Oberfläche der Sichtschicht sein, oder die Vorbereitung zur Bedruckung und anschließend die Bedruckung der Sichtschicht und/oder die Versiegelung der sichtbaren Oberfläche der Sichtschicht.

Das in dieser Anmeldung beschriebene bioabbaubare Flächengebilde wird als Trägermaterial für Druckverfahren, beispielsweise Tintenstrahldrucker verwendet. Beispielsweise kann das hergestellte bioabbaubare Flächengebilde in eine Druckvorrichtung eingebracht und von dieser bedruckt werden. Da das bioabbaubare Flächengebilde in diesem Fall der Träger des Drucks ist, wird in diesem Zusammenhang auch von einem Trägermaterial für das Druckverfahren berichtet.

Es ist bevorzugt, wenn die Druckfarben ebenfalls bioabbaubar sind. Bioabbaubare Farben sind beispielsweise Farben, die aus Mineralien, Pflanzen und/oder Tieren gewonnen wurden, wie etwa Indigo, Purpur oder Karmin.

Das mit einem (Auf-)Druck versehene bioabbaubare Flächengebilde kann bevorzugt als Werbe-, Informations-, oder Dekorationsfläche oder Objekt verwendet werden. Beispielsweise kann ein bedrucktes bioabbaubares Flächengebilde als Bandenwerbung in einem Stadion verwendet werden. Weiterhin ist denkbar, dass das bioabbaubare Flächengebilde als Plakat für Plakatwände, Litfasssäulen oder temporäre Absperrungen verwendet wird. Aber auch bedruckte Servietten, Tischdecken, Wandschirme oder Abdeckungshüllen (Planen oder ähnliches) können bioabbaubare Flächengebilde im Sinne der Erfindung sein.

Das bioabbaubare Flächengebilde kann vorteilhaft überall dort eingesetzt werden, wo lediglich eine kurzfristige Verwendung des Flächengebildes mit möglichst wenig Entsorgungsaufwand erwünscht wird. Im Fall einer Bandenwerbung oder einer Plakatwerbung soll die Werbebotschaft oder die Information lediglich über eine geringe Zeitspanne vermittelt werden (beispielsweise bis eine Spielsaison abgelaufen oder ein Konzert vorbei ist). Nachdem diese Zeitspanne abgelaufen ist, besteht keine Verwendung mehr für das Flächengebilde, weswegen eine unkomplizierte und umweltschonende Entsorgung wünschenswert ist. Im Fall des erfindungsgemäßen Flächengebildes kann das Flächengebilde einfach und unproblematisch kompostiert werden, wobei die Verrottung des bioabbaubaren Flächengebildes lediglich einige Wochen dauert. Aufwändige und kostenintensive Entsorgungsschritte können vorteilhaft vermieden werden.

Die Erfindung wird nachfolgend anhand von Figuren näher beschrieben
- Figur 1: stellt die Festigkeit verschiedener Garne dar.
- Figur 2: stellt die Festigkeit verschiedener Garne in Abhängigkeit der Zugdehnung dar.
- Figur 3: stellt den Schrumpf verschiedener Garne in Abhängigkeit der Temperatur dar.

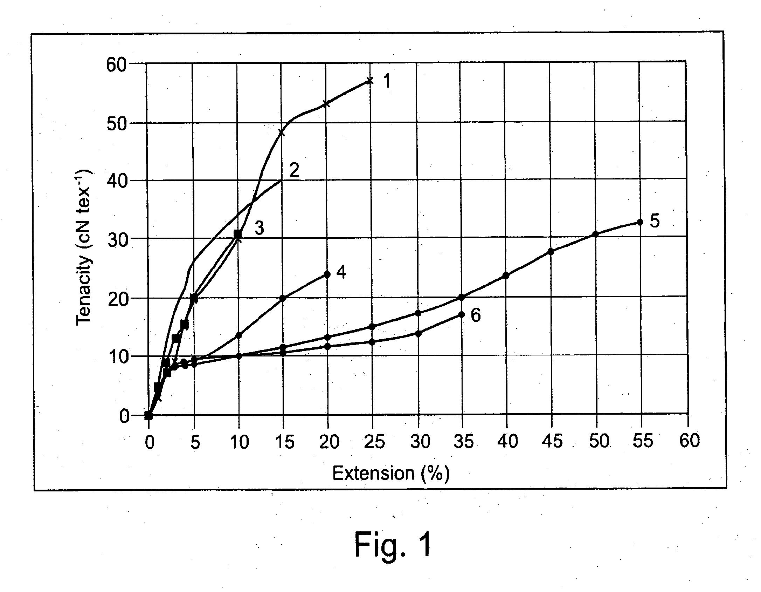

In Figur 1 ist die Festigkeit verschiedener Garne in Abhängigkeit der Dehnung dargestellt. Mit der Bezugsziffer 1 wurde die Kurve eines HT Polyester-Garns (HT = high Tenacity) gekennzeichnet. Die Bezugsziffer 2 kennzeichnet die Kurve eines Lyocell-Garns, 3 beschreibt die Kurve eines Baumwollgarns, 4 die Kurve eines Viskose-Garns, 5 die Kurve eines Garns aus Polymilchsäure und 6 die Kurve eines Woll-Garns. Alle in Figur 1 dargestellten Garne sind sogenannte textile Garne. Textile Garne unterscheiden sich von den technischen Garnen dadurch, dass sie eine geringere Festigkeit und eine höhere Bruchdehnung aufweisen als die technischen Garne.

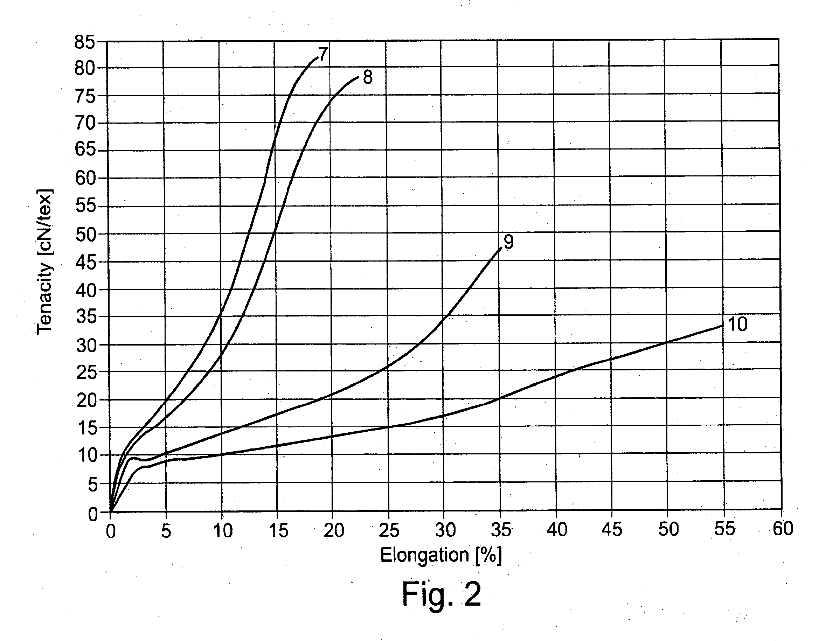

In Figur 2 ist die Bruchdehnung von technischen Garnen im Vergleich zu einem nicht technischen (also einem textilen) Polymilchsäure Garn dargestellt. Die Kurve mit dem Bezugszeichen 7 gehört zu einem Standard Diolen ® Garn (Polyethylenterephthalat, kein Polymilchsäure-Garn) mit der Bezeichnung 174ST und 1100 dtex bei 210 Filamenten. Die Kurve mit dem Bezugszeichen 8 gehört ebenfalls zu einem Standard Diolen ® Garn (Polyethylenterephthalat, kein Polymilchsäure-Garn) mit der Bezeichnung 170ST und 1100 dtex bei 210 Filamenten. Mit dem Bezugszeichen 9 ist die Kurve eines Garns gekennzeichnet, dass aus Polymilchsäure hergestellt ist und als technisches Garn bezeichnet werden kann. Es handelt sich bei dem Garn um Diolen ® 150BT mit 1100 dtex bei 210 Filamenten. Im Vergleich zu den Kurven der genannten technischen Garnen 7, 8 und 9 ist auch ein textiles Garn mit der Kurve 10 dargestellt. Das textile Garn ist ein textiles Polymilchsäure Garn.

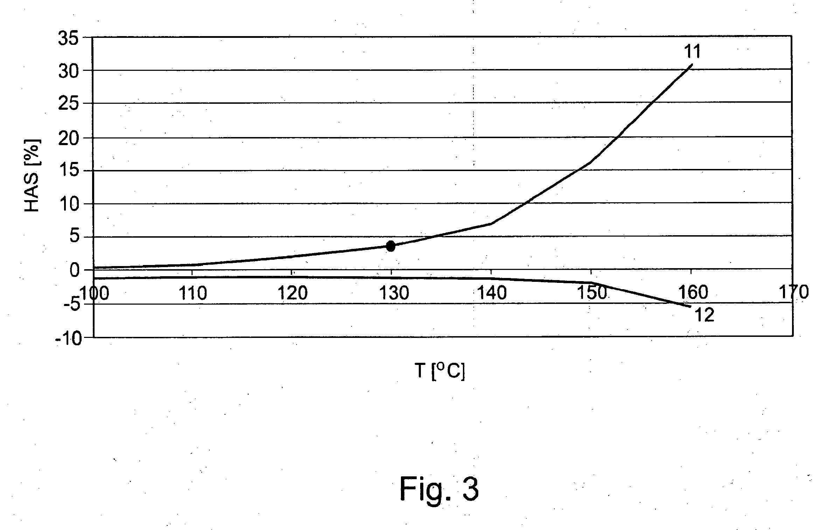

In Figur 3 ist der Schrumpf des technischen Polymilchsäure Garns Diolen ® 150BT mit 1100 dtex, 210 Filamenten dargestellt. Die Kurve 11 beschreibt den Schrumpf des Garns bei einer Vorspannung mit 1 mN/tex und die Kurve 12 beschreibt den Schrumpf bei einer Vorspannung mit 5 mN/tex.

## Patentansprüche

1. Flächengebilde zur Verwendung als Trägermaterial für Druckverfahren mit einer Trägerschicht und einer Sichtschicht, wobei die Trägerschicht ein Textil aus Garnen aus einem gemäß DIN Norm 13432:2000-12 bioabbaubaren Polymer aufweist, die Sichtschicht eine gemäß DIN Norm 13432:2000-12 bioabbaubare Folie aufweist und als separate Schicht auf die Trägerschicht aufgebracht ist, **dadurch gekennzeichnet, dass** die Garne des Textils Multifilamentgarne sind und eine Festigkeit von mehr als 40cN/tex gemessen nach DIN EN ISO 2062 besitzen und dass die Folie der Sichtschicht aus Polymilchsäure besteht.

2. Flächengebilde nach Anspruch 1, **dadurch gekennzeichnet, dass** das Textil der Trägerschicht aus Multifilamentgarnen aus gemäß DIN Norm 13432:2000-12 bioabbaubarer Polymilchsäure besteht, die eine Festigkeit von mehr als 40cN/tex gemessen nach DIN EN ISO 2062 besitzen.

3. Flächengebilde nach mindestens einem der vorhergehenden Ansprüche, **dadurch gekennzeichnet, dass** das Textil der Trägerschicht ein Gewebe, Gewirke, Gelege, Gestrick oder ein Vlies ist.

4. Flächengebilde nach mindestens einem der vorhergehenden Ansprüche, **dadurch gekennzeichnet, dass** die Folie der Sichtschicht auf die Trägerschicht laminiert, kaschiert oder kalandriert ist.

5. Flächengebilde nach mindestens einem der vorhergehenden Ansprüche, **dadurch gekennzeichnet, dass** die Folie der Sichtschicht eine bedruckbare Oberfläche aufweist oder bedruckt ist.

6. Verfahren zur Herstellung eines Flächengebildes zur Verwendung als Trägermaterial für Druckverfahren, wobei ein Textil als Trägermaterial aus Garnen aus einem gemäß DIN Norm 13432:2000-12 bioabbaubaren Polymer und eine Sichtschicht aus einer gemäß DIN Norm 13432:2000-12 bioabbaubaren Folie hergestellt werden, wonach die ausgebildete Sichtschicht mit der ausgebildeten Trägerschicht verbunden wird, **dadurch gekennzeichnet, dass** das Trägermaterial aus Multifilamentgarnen mit einer Festigkeit von 40cN/tex gemessen nach DIN EN ISO 2062 hergestellt wird und dass als Sichtschicht eine Folie aus Polymilchsäure eingesetzt wird.

7. Verfahren nach Anspruch 6, **dadurch gekennzeichnet, dass** die Verbindung der Trägerschicht und der Sichtschicht durch Kaschieren, Laminieren oder Kalandrieren erfolgt.

8. Verfahren nach Anspruch 7, **dadurch gekennzeichnet, dass** zur Kaschierung, Kalandrierung oder Laminierung die Trägerschicht erwärmt wird.

9. Verfahren nach Anspruch 7, **dadurch gekennzeichnet, dass** zur Kaschierung, Laminierung oder Kalandrierung die Sichtschicht erwärmt wird.

10. Verfahren nach Anspruch 7, **dadurch gekennzeichnet, dass** zur Kaschierung Laminierung oder Kalandrierung sowohl die Sichtschicht als auch die Trägerschicht erwärmt werden.

11. Verfahren nach mindestens einem der Ansprüche 6 bis 10, **dadurch gekennzeichnet, dass** eine Oberfläche der Sichtschicht nach der Kaschierung, Kalandrierung oder Laminierung behandelt wird oder vor der Kaschierung, Kalandrierung oder Laminierung behandelt wird.

12. Verwendung eines gemäß DIN Norm 13432:2000-12 bioabbaubaren Flächengebildes nach mindestens einem der Ansprüche 1 bis 5 als Werbe-, Informations- oder Dekorationsfläche oder Objekt.

## Claims

1. Fabric for use as a base material for printing processes, having a base layer and a visible layer, wherein the base layer has a textile made from yarns made from a biodegradable polymer according to DIN 13432:2000-12, the visible layer has a biodegradable film according to DIN 13432:2000-12 and is placed on the base layer as a separate layer, **characterized in that** the yarns of the textile are multifilament yarns and have a strength of more than 40 cN/tex measured according to DIN EN ISO 2062 and that the film of the visible layer consists of polylactic acid.

2. Fabric according to Claim 1, **characterized in that** the textile of the base layer consists of multifilament yarns made from biodegradable polylactic acid according to DIN 13432:2000-12 that have a strength of more than 40 cN/tex measured according to DIN EN ISO 2062.

3. Fabric according to at least one of the previous claims, **characterized in that** the textile of the base layer is a woven, a knitted fabric, a composite, or a nonwoven.

4. Fabric according to at least one of the previous claims, **characterized in that** the film of the visible layer is laminated or calendered to the base layer.

5. Fabric according to at least one of the previous claims, **characterized in that** the film of the visible layer has a printable surface or is printed.

6. Method for producing a fabric for use as a base material for printing processes, wherein a textile as a base material is produced from yarns made from a biodegradable polymer according to DIN 13432:2000-12 and a visible layer made from a biodegradable film according to DIN 13432:2000-12 is produced, after which the formed visible layer is connected to the formed base layer, **characterized in that** the base material is produced from multifilament yarns with a strength of 40 cN/tex measured according to DIN EN ISO 2062 and that a film made from polylactic acid is used as the visible layer.

7. Method according to Claim 6, **characterized in that** the connection of the base layer and the visible layer takes place by laminating or calendering.

8. Method according to Claim 7, **characterized in that** the base layer is heated for the lamination or calendering.

9. Method according to Claim 7, **characterized in that** the visible layer is heated for the lamination or calendering.

10. Method according to Claim 7, **characterized in that** the visible layer as well as the base layer is heated for the lamination or calendering.

11. Method according to at least one of Claims 6 to 10, **characterized in that** a surface of the visible layer is treated after the lamination or calendering or is treated prior to the lamination or calendering.

12. Use of a biodegradable fabric according to DIN 13432:2000-12 and at least one of Claims 1 to 5 as an advertising, informational, or decorative surface or object.

## Revendications

1. Matériau en feuille destiné à une utilisation en tant que matériau support pour des procédés d'impression, comprenant une couche de support et une couche visible, la couche de support présentant un textile fait de fils à partir d'un polymère biodégradable conformément à la norme DIN 13432:2000-12, la couche visible présentant une feuille biodégradable conformément à la norme DIN 13432:2000-12 et étant appliquée en tant que couche séparée sur la couche de support, **caractérisé en ce que** les fils du textile sont des fils multifilaments et possèdent une résistance de plus de 40 cN/tex, mesurée selon DIN EN ISO 2062, et **en ce que** la feuille de la couche visible est constituée d'acide polylactique.

2. Matériau en feuille selon la revendication 1, **caractérisé en ce que** le textile de la couche de support est constitué de fils multifilaments en acide polylactique biodégradable conformément à la norme DIN 13432:2000-12, qui présentent une résistance de plus de 40 cN/tex, mesurée selon DIN EN ISO 2062.

3. Matériau en feuille selon au moins une des revendications précédentes, **caractérisé en ce que** le textile de la couche de support est une structure tissée, une structure de bonneterie, une structure nappée, une structure tricotée ou une structure non tissée.

4. Matériau en feuille selon au moins une des revendications précédentes, **caractérisé en ce que** la feuille de la couche visible est appliquée sur la couche de support par laminage, contrecollage ou calandrage.

5. Matériau en feuille selon au moins une des revendications précédentes, **caractérisé en ce que** la feuille de la couche visible présente une surface imprimable ou est imprimée.

6. Procédé de fabrication d'un matériau en feuille destiné à une utilisation en tant que matériau support pour des procédés d'impression, selon lequel on fabrique un textile en tant que matériau support, à partir de fils en polymère biodégradable conformément à la norme DIN 13432:2000-12, et une couche visible à partir d'une feuille biodégradable conformément à la norme DIN 13432:2000-12, à la suite de quoi la couche visible formée est reliée à la couche de support formée, **caractérisé en ce que** le matériau support est fabriqué à partir de fils multifilaments ayant une résistance de 40 cN/tex mesurée selon DIN EN ISO 2062, et **en ce que** l'on utilise comme couche visible une feuille en acide polylactique.

7. Procédé selon la revendication 6, **caractérisé en ce que** la liaison entre la couche de support et la couche visible est réalisée par contrecollage, laminage ou calandrage.

8. Procédé selon la revendication 7, **caractérisé en ce que** pour le contrecollage, le calandrage ou le laminage, la couche de support est chauffée.

9. Procédé selon la revendication 7, **caractérisé en ce que** pour le contrecollage, le laminage ou le calandrage, la couche visible est chauffée.

10. Procédé selon la revendication 7, **caractérisé en ce que** pour le contre-collage, le laminage ou le calandrage, aussi bien la couche visible que la couche de support est chauffée.

11. Procédé selon au moins une des revendications 6 à 10, **caractérisé en ce qu'**une surface de la couche visible est traitée après le contrecollage, le calandrage ou le laminage ou est traitée avant le contrecollage, le calandrage ou le laminage.

12. Utilisation d'un matériau en feuille, biodégradable conformément à la norme DIN 13432:2000-12, selon au moins une des revendications 1 à 5, en tant que surface de publicité, d'information ou de décoration ou en tant qu'objet.
